# EUROPEAN PATENT APPLICATION

(11) **EP 2 242 304 A1**
(43) Date of publication of application: **20.10.2010**
(21) Application number: 09708689.6
(22) Date of filing: 02.02.2009
(51) Int. Cl.: H04W 24/10, H04B 7/06, H04W 88/02

(54) **MOBILE COMMUNICATION DEVICE, BASE STATION DEVICE, WIRELESS CONTROL METHOD, AND MOBILE COMMUNICATION SYSTEM**

(30) Priority: 05.02.2008 JP 2008025401
(71) Applicant: Sharp Kabushiki Kaisha, Osaka-shi, Osaka 545-8522 (JP)
(72) Inventor: TAKAGI, Yuhsuke, Osaka-shi, Osaka 545-8522 (JP); HIKOSO, Keiji, Osaka-shi, Osaka 545-8522 (JP); SAKAMOTO, Mitsuru, Osaka-shi, Osaka 545-8522 (JP); SHIMONABE, Tadashi, Osaka-shi, Osaka 545-8522 (JP); OHSHIMA, Akira, Osaka-shi, Osaka 545-8522 (JP)
(74) Representative: Müller - Hoffmann & Partner
(86) International application number: PCT/JP2009/051695
(87) International publication number: WO 2009/099024

(57) **Abstract**

A mobile communication device includes a plurality of antennas which transmits and receives a radio signal, and a baseband processor which selects a transmission antenna used for data signal transmission from the plurality of antennas based on an instruction from a base station device and transmits a data signal using the transmission antenna, wherein the baseband processor determines a timing when a reference signal is transmitted using a standby antenna not used for data signal transmission based on the likelihood of the transmission antenna being switched and transmits the reference signal based on the determined timing.

## Description

### TECHNICAL FIELD

The present invention relates to a mobile communication device, a base station device, a radio control method, and a mobile communication system.
This application claims priority to and the benefits of Japanese Patent Application No. 2008-025401 filed on February 5, 2008, the disclosure of which is incorporated herein by reference.

### BACKGROUND ART

When a mobile communication device receives a transmission signal from a base station device, a change of a relative position of the base station device and the mobile communication device causes Rayleigh fading. The Rayleigh fading greatly changes the phase or amplitude of a received signal. When the signal amplitude is greatly reduced, a property of the received signal in the mobile communication device is greatly deteriorated, making it difficult to perform a demodulation process. Such a phenomenon also occurs even in a reverse link, i.e., when a signal from the mobile communication device is received by the base station device.
Various conventional schemes have been proposed to cope with such Rayleigh fading. One example includes a scheme of achieving a spatial diversity effect using a plurality of antennas in a mobile communication device.

Spatial diversity refers to a technique of achieving the diversity effect by transmitting or receiving a signal using a plurality of spatially separated antennas. The spatial diversity makes it possible to transmit a signal using another antenna when the amplitude of a received signal transmitted using one antenna is greatly reduced. The spatial diversity uses a property that when a spatial correlation between antennas is low, received signal strength indicators at a receiving side for respective signals transmitted from the antennas are independently changed.

As schemes of using a plurality of antennas, a scheme of selecting any one of the antennas to transmit a signal, and a scheme of controlling directivity by assigning a weight to respective antennas and simultaneously transmitting signals from both antennas for optimal reception at a receiving side have been considered. As another scheme of using a plurality of antennas, spatial multiplexing (Multi Input Multi Output; MIMO) in which different data streams are transmitted in parallel from both antennas in a good electric wave environment has been considered.
However, the directivity control scheme or the MIMO scheme requires two groups of signal transmission-related devices, including a power amplifier (PA) as well as a plurality of antennas. This increases the size and cost of a mobile communication device.
Accordingly, a scheme of selecting any one of antennas and transmitting a signal using only the antenna is advantageous for a simple mobile communication device. This method can achieve a sufficient spatial diversity effect.

A base station device requires the following process to select one of a plurality of antennas of a mobile communication device. First, the mobile communication device transmits reference signals from the respective antennas. The base station device receives the reference signals transmitted from the respective antennas and obtains quality indicators for the respective reference signals. The base station device selects any one antenna used for communication based on the quality indicators.
Thus, in a system for selecting one antenna from the plurality of antennas and transmitting a signal, it is necessary to transmit the reference signals from an antenna for transmitting data as well as from the other antennas of the mobile communication device. As a result, it is necessary to occasionally switch the antenna and transmit the reference signal.
Hereinafter, a process of switching the antenna based on the reference signal in the base station device will be described with reference to the accompanying drawing.

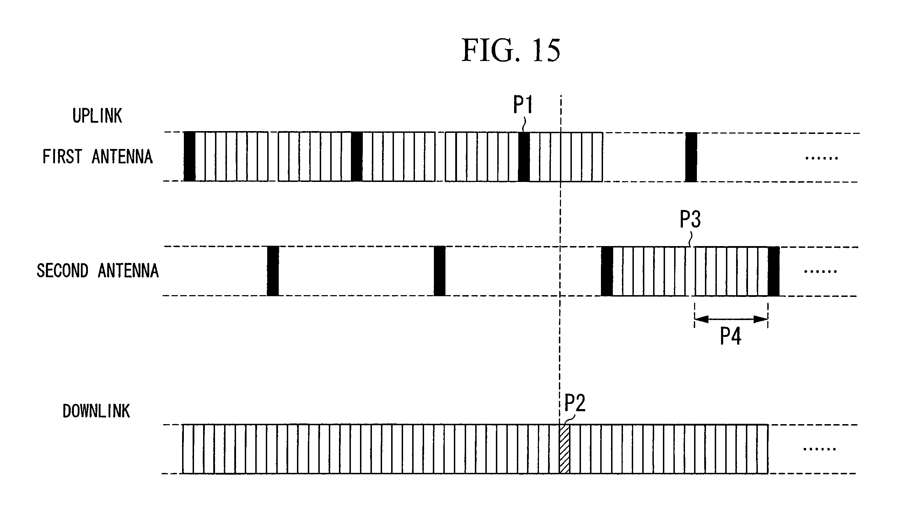

FIG. 15 shows a problem associated with reference signal transmission described above. In FIG. 15, a communication situation from a mobile communication device to a base station device (uplink) and a communication situation from the base station device to the mobile communication device (downlink) are shown. In FIG. 15, the mobile communication device includes two antennas: a first antenna 11 and a second antenna. In FIG. 15, states of an uplink in the first antenna 11 and an uplink and a downlink in the second antenna are shown from the top. In FIG. 15, a horizontal axis indicates time.
In FIG. 15, the mobile communication device transmits a reference signal alternately from the first antenna 11 and the second antenna every 8 symbols. In FIG. 15, black squares denote the reference signals. Further, white squares denote data signals. The base station device receives the reference signals transmitted from the first antenna 11 and the second antenna and measures the quality of the signals transmitted from the respective antennas. The base station device determines, for example, a modulation scheme and a coding scheme to optimize the quality based on the result of the measurement, and indicates the modulation scheme and the coding scheme to the mobile communication device.

As shown in FIG. 15, even when the data signal is being transmitted by the first antenna, the reference signal is transmitted from the second antenna as well as from the first antenna. This is because when the base station determines that the signal transmitted from the second antenna has excellent quality, the used antenna is switched to the second antenna. Since such switching is likely to occur, the reference signal needs to be transmitted from the second antenna as well. Hereinafter, an antenna that is transmitting a data signal is referred to as a "transmission antenna" and an antenna that is not transmitting a data signal is referred to as a "standby antenna."

In FIG. 15, when the base station device receives a reference signal P1, the base station device determines that the quality at the second antenna side is high. In this case, the base station device transmits an antenna switching request signal P2 to the mobile communication device to instruct the mobile communication device to switch the transmission antenna.
When the mobile communication device receives the antenna switching request signal P2, the mobile communication device switches the transmission antenna to the second antenna according to the instruction at a transmission timing for a next reference signal. Such an operation allows stable communication to be always performed using an optimal antenna.

The reference signal is not used only when the base station device determines whether or not to switch the antenna. For example, in long term evolution (LTE) 3rd generation partnership project (3 GPP), which is currently under review, the use of the reference signal for resource assignment or adaptive modulation and coding (AMC) determination has been considered (see Non-Patent Document 1).
Non-Patent Document 1: "Closed Loop Antenna Switching in E-UTRA Uplink", [online], 3GPP TSG RAN WG1 Meeting #48, [Searched on January 18, 2008], the Internet <URL: ftp://ftp.3gpp. org/tsg_ran/WG1_RL1/TSGR1_48/Docs/R1-070860.zip>

### DISCLOSURE OF INVENTION

### Problem to be Solved by the Invention

However, according to a conventional art, the transmission antenna does not transmit the reference signal at a timing when the standby antenna transmits the reference signal (see a timing P3 in FIG. 15). In this case, quality evaluation for the transmission antenna at the timing P3 is not performed in the base station device. This makes it difficult for the base station device to optimally perform resource block assignment or AMC control for the transmission antenna in a next data transmission period P4. To cope with such a problem, it is necessary to set AMC on the assumption of a little deterioration based on previously measured signal quality of the transmission antenna in consideration of a margin. As a result, control corresponding to the most recent signal quality of the transmission antenna is not performed and throughput is degraded. This causes deterioration of a system property. That is, optimal resource assignment or AMC cannot be realized and communication quality is deteriorated.

It is an object of the present invention to provide a device and method capable of suppressing deterioration of communication quality in a system in which a reference signal is transmitted using a plurality of antennas.

### Means for Solving the Problem

According to a first aspect of the present invention, a mobile communication device includes a plurality of antennas which transmits and receives a radio signal, and a baseband processor. The baseband processor selects an antenna (transmission antenna) used for data signal transmission from the plurality of antennas based on an instruction from a base station device, and transmits a data signal using the transmission antenna. Further, the baseband processor determines a timing when a reference signal is transmitted using an antenna (standby antenna) not used for the data signal transmission based on the likelihood of the transmission antenna being switched and transmits the reference signal based on the determined timing.

According to the first aspect of the present invention, a timing when the reference signal is transmitted using the standby antenna is determined based on the likelihood of the transmission antenna being switched.
More specifically, the baseband processor determines the timing such that the frequency of reference signal transmissions from the standby antenna is low when the switching likelihood is low. Conversely, the baseband processor determines the timing such that the frequency of the reference signal transmissions from the standby antenna is high when the switching likelihood is high. The reference signal transmitted from the standby antenna is used only to determine switching of the transmission antenna. Accordingly, when the likelihood of the transmission antenna being switched is low, any problem associated with switching is not caused even with a low frequency of the reference signal transmitted from the standby antenna. Meanwhile, as the frequency of the reference signal transmission from the standby antenna becomes low, the frequency of the reference signal transmissions from the transmission antenna becomes high. Accordingly, resource assignment or AMC control in the base station is properly performed based on the reference signal transmitted from the transmission antenna. Therefore, in a system in which the reference signal is transmitted from a plurality of antennas, the deterioration of the communication quality can be suppressed.

In the first aspect of the present invention, the baseband processor may have a plurality of patterns for the timing when the reference signal is transmitted using the standby antenna, and may determine the switching likelihood based on a difference in signal quality between the transmission antenna and the standby antenna, may select a pattern in which the frequency of the reference signal transmissions from the standby antenna is low when the difference in signal quality between the transmission antenna and the standby antenna is great, may select a pattern in which the frequency of the reference signal transmission from the standby antenna is high when the difference is small, and may transmit the reference signal based on the selected pattern.

In the first aspect of the present invention, the baseband processor may determine the switching likelihood based on a difference in signal quality between the transmission antenna and the standby antenna, and may transmit the reference signal from the standby antenna when the difference in signal quality between the transmission antenna and the standby antenna is smaller than a threshold.

In the first aspect of the present invention, the baseband processor may have a plurality of patterns for the timing when the reference signal is transmitted using the standby antenna, and may determine the switching likelihood based on occurrence of the transmission antenna switching process, may select a pattern in which the frequency of the reference signal transmissions from the standby antenna is high directly after the transmission antenna is switched, may select a pattern in which the frequency of the reference signal transmissions from the standby antenna is low when a given condition is then satisfied, and may transmit the reference signal based on the selected pattern.

In the first aspect of the present invention, the mobile communication device may further include a moving speed measuring unit which measures a moving speed of the mobile communication device. In this case, the baseband processor may determine the switching likelihood based on the measured moving speed, may select a pattern in which the frequency of the reference signal transmissions from the standby antenna is low when the measured moving speed is low, may select a pattern in which the frequency of the reference signal transmissions from the standby antenna is high when the measured moving speed is high, and may transmit the reference signal based on the selected pattern.

According to a second aspect of the present invention, there is provided a base station device that performs radio communication with a mobile communication device including a plurality of antennas which transmits and receives a radio signal, and a baseband processor which selects a transmission antenna used for data signal transmission from the plurality of antennas and transmits a data signal using the transmission antenna. The base station device includes a baseband unit which determines whether the transmission antenna is to be switched based on quality indicators of reference signals received from the plurality of antennas, and determines a timing when the reference signal is transmitted using a standby antenna not used for the data signal transmission based on the likelihood of the transmission antenna being switched.
According to the second aspect of the present invention, the same operation and effect as in the first aspect of the present invention can be achieved.

According to a third aspect of the present invention, there is provided a mobile communication system which transmits a signal from a mobile communication device to a base station device through spatial diversity, wherein the base station device indicates a transmission pattern to the mobile communication device, an antenna from which a reference signal is transmitted from the mobile communication device to the base station device and a timing when the reference signal is transmitted from the mobile communication device to the base station device being set in the transmission pattern, and the mobile communication device transmits the reference signal according to the transmission pattern indicated by the base station device.

In the third aspect of the present invention, the transmission pattern may be indicated to each mobile communication device.
In the third aspect of the present invention, a reference signal transmission cycle may be determined by selecting one of a plurality of patterns.

In the third aspect of the present invention, the plurality of patterns may include a pattern in which two antennas alternately transmit the reference signal, and a pattern in which the two antennas do not alternately transmit the reference signal.

In the third aspect of the present invention, the mobile communication device may transmit the reference signal according to the transmission pattern indicated by the base station device until a new indication is received.

According to a fourth aspect of the present invention, there is provided a base station device in a mobile communication system in which a signal is transmitted from a mobile communication device to a base station device through spatial diversity, wherein the base station device indicates a transmission pattern to the mobile communication device, an antenna from which a reference signal is transmitted from the mobile communication device to the base station device and a timing when the reference signal is transmitted from the mobile communication device to the base station device being set in the transmission pattern.

In the fourth aspect of the present invention, the transmission pattern may be indicated to each mobile communication device.
In the fourth aspect of the present invention, the transmission pattern may be one transmission pattern selected from a plurality of transmission patterns, a reference signal transmission cycle being set in the transmission pattern.

In the fourth aspect of the present invention, the plurality of patterns may include a pattern in which two antennas alternately transmit the reference signal, and a pattern in which the two antennas do not alternately transmit the reference signal.

According to a fifth aspect of the present invention, there is provided a mobile communication device in a mobile communication system in which a signal is transmitted from the mobile communication device to a base station device through spatial diversity, wherein the mobile communication device receives an indication of a transmission pattern from the base station device and transmits a reference signal according to the indication, an antenna from which the reference signal is transmitted from the mobile communication device to the base station device and a timing when the reference signal is transmitted from the mobile communication device to the base station device being set in the transmission pattern.

In the fifth aspect of the present invention, the transmission pattern may be one transmission pattern selected from a plurality of transmission patterns, and the reference signal may be transmitted based on a transmission cycle determined based on the pattern.

In the fifth aspect of the present invention, the mobile communication device may transmit the reference signal according to the transmission pattern indicated by the base station device until a new indication is received.

The present invention may be specific to a radio control method performed by a computer serving as the mobile communication device or the base station device described above.

### Effect of the Invention

According to the present invention, in the mobile communication device, when the likelihood of the transmission antenna being switched is low, reference signal transmissions from the standby antenna is decreased and the frequency of reference signal transmissions from the transmission antenna is increased. Accordingly, it is possible to optimally perform a process of switching the transmission antenna and to realize proper control (e.g., resource assignment or AMC control) based on the reference signal in the transmission antenna. Realization of such control makes it possible to suppress the deterioration of communication quality.

### BRIEF DESCRIPTION OF THE DRAWINGS

FIG. 1 shows a network architecture of a mobile communication system according to the present invention.
FIG. 2 is a schematic functional block diagram of a mobile communication device according to a first embodiment.
FIG. 3 is a schematic functional block diagram of a base station device according to the first embodiment.
FIG. 4 shows a reference signal transmission operation according to the first embodiment of a mobile communication system.
FIG. 5 is a flowchart showing an operation of a pattern selection process in a baseband processor according to the first embodiment.
FIG. 6 is a schematic functional block diagram of a mobile communication device according to a second embodiment.
FIG. 7 shows a reference signal transmission operation according to the second embodiment of a mobile communication system.
FIG. 8 is a flowchart showing an operation of a baseband processor according to the second embodiment.
FIG. 9 is a schematic functional block diagram of a mobile communication device according to a third embodiment.
FIG. 10 is a schematic functional block diagram of a base station device according to the third embodiment.
FIG. 11 shows a reference signal transmission operation according to the third embodiment of a mobile communication system.
FIG. 12 is a flowchart showing an operation of a baseband processor according to the third embodiment.
FIG. 13 is a schematic functional block diagram of a mobile communication device according to a fourth embodiment.
FIG. 14 is a flowchart showing an operation of a baseband processor according to the fourth embodiment.
FIG. 15 shows a problem associated with conventional reference signal transmission.

### Reference Symbols

10: mobile communication device, 11: first antenna, 12: second antenna, 13: first receiver, 14: second receiver, 15: baseband processor, 16: transmitter, 17: antenna switch, 18: moving speed measuring unit, 20: base station device, 21: antenna, 22: receiver, 23: baseband processor, 24: transmitter, 100: mobile communication system

### BEST MODE FOR CARRYING OUT THE INVENTION

### [First embodiment]

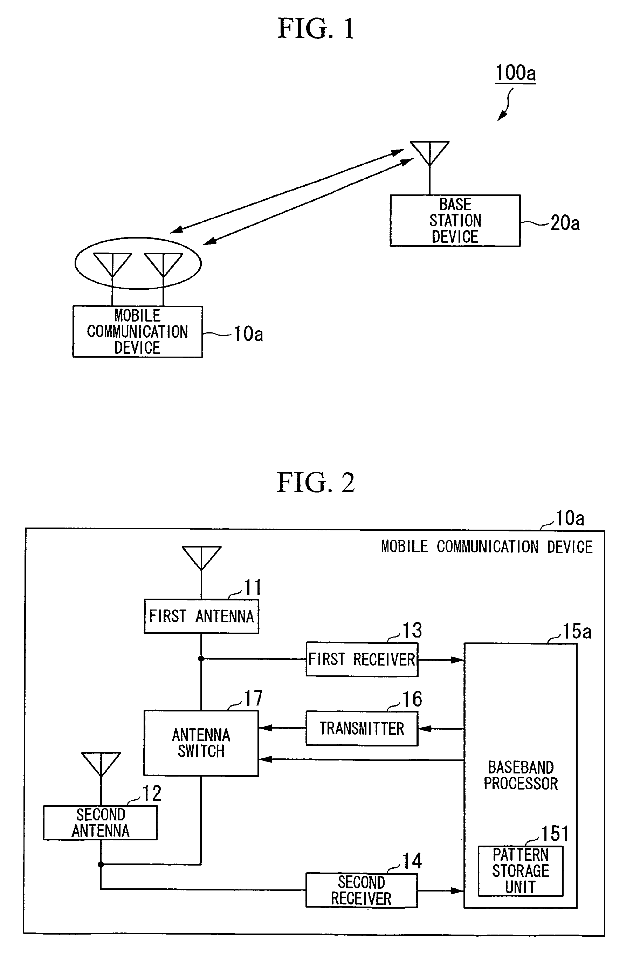

FIG. 1 shows a network architecture of a mobile communication system 100a (a first embodiment). The mobile communication system 100a includes a mobile communication device 10a including a plurality of antennas, and a base station device 20a. The mobile communication device 10a performs radio communication with the base station device 20a. The mobile communication device 10a performs radio communication with another mobile communication device via the base station device 20a.
The mobile communication device 10a includes the plurality of antennas. The mobile communication device 10a transmits reference signals to the base station device 20a using a transmission antenna and a standby antenna. In particular, the reference signal transmitted using the standby antenna is transmitted so that the base station device 20a can determine which antenna is suitable for radio communication with the mobile communication device 10a. The mobile communication device 10a determines a timing when the reference signal is transmitted using the standby antenna, based on the likelihood of the transmission antenna being switched. Hereinafter, the mobile communication device 10a and the base station device 20a will be described in detail.

FIG. 2 is a schematic functional block diagram of the mobile communication device 10a. The mobile communication device 10a includes a first antenna 11, a second antenna 12, a first receiver 13, a second receiver 14, a baseband processor 15a, a transmitter 16, and an antenna switch 17.
Each of the first antenna 11 and the second antenna 12 may include a known radio communication antenna. The first antenna 11 supplies a received signal to the first receiver 13. The second antenna 12 supplies a received signal to the second receiver 14. Further, the first antenna 11 and the second antenna 12 transmit a signal that is received via the antenna switch 17.

The first receiver 13 converts the signal received by the first antenna 11 to a baseband signal, performs analog-to-digital conversion to the baseband signal converts and demodulates, and outputs a digital baseband signal. The second receiver 14 converts the signal received by the second antenna 12 to a baseband signal, performs analog-to-digital conversion to the baseband signal and demodulates, and outputs a digital baseband signal.
The baseband processor 15a performs diversity synthesis to the digital baseband signal output from the first receiver 13 and the digital baseband signal output from the second receiver 14. Further, the baseband processor 15a selects an antenna for data signal transmission and controls the transmitter 16 and the antenna switch 17. The baseband processor 15a includes a pattern storage unit 151, and controls reference signal transmission using a plurality of patterns stored in the pattern storage unit 151. The reference signal transmission control will be described below.

The transmitter 16 performs a transmission process such as digital-to-analog conversion on baseband data stream to be transmitted, which is output from the baseband processor 15. The antenna switch 17 selects one of the first antenna 11 and the second antenna 12 to which an output from the transmitter 16 is to be supplied, according to an instruction from the baseband processor 15a.
The mobile communication device 10a uses any one of the antennas to transmit a signal, but uses all the antennas to receive a signal, which is input to the baseband processor 15a.

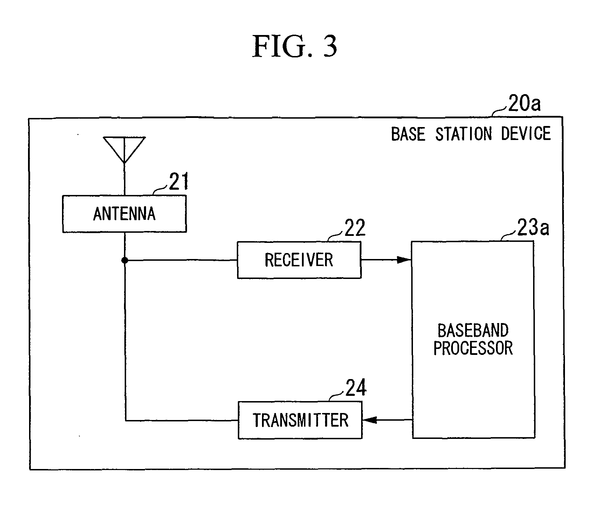

FIG. 3 is a schematic functional block diagram of the base station device 20a. The base station device 20a includes an antenna 21, a receiver 22, a baseband processor 23a, and a transmitter 24.
The antenna 21 may include a known radio communication antenna. The antenna 21 supplies a received signal to the receiver 22. The antenna 21 transmits a signal that is received from the transmitter 24.

The receiver 22 converts the signal received by the antenna 21 into a baseband signal, performs analog-to-digital conversion to the baseband signal and demodulation, and outputs a digital baseband signal. The baseband processor 23a receives a digital baseband signal from the receiver 22 and performs various processes on the digital baseband signal. For example, the baseband processor 23a acquires a quality indicator of each reference signal received via the receiver 22, selects an antenna used for communication, and provides an instruction to the mobile communication device 10a. The transmitter 24 performs a transmission process such as digital-to-analog conversion on a baseband data stream to be transmitted, which is output from the baseband processor 23a.

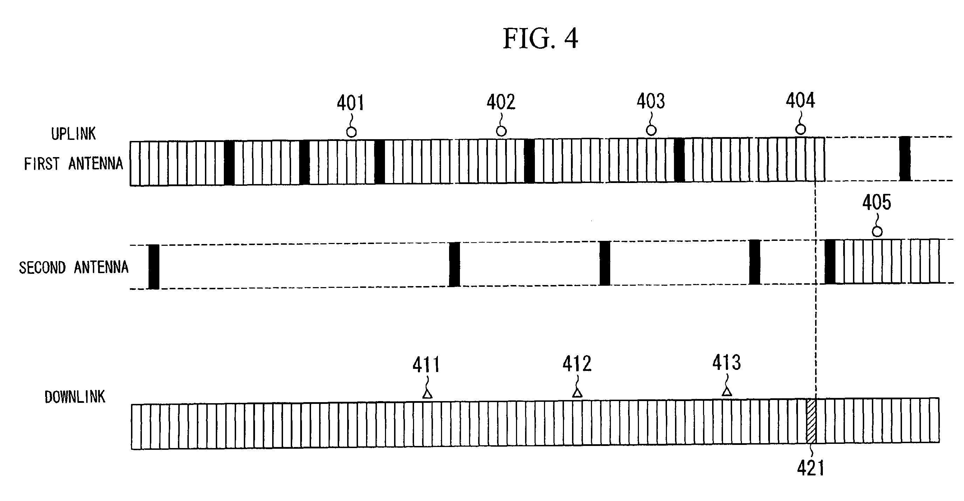

FIG. 4 shows an example of a reference signal transmission operation in the mobile communication system 100a. In FIG. 4, reference signal transmission timings are indicated by black squares. Hereinafter, the reference signal transmission operation in the mobile communication system 100a will be described with reference to FIG. 4.

A conventional mobile communication device transmits the reference signal from the standby antenna at a fixed frequency (e.g., every second time in FIG. 15). On the other hand, the mobile communication system 100a has a plurality of patterns for the transmission frequency of the reference signal, and transmits the reference signal according to the plurality of patterns. FIG. 4 shows two patterns: a pattern in which the standby antenna transmits the reference signal at a frequency of every fourth time (a first pattern), and a pattern in which the standby antenna transmits the reference signal at a frequency of every second time (a second pattern). An expression "the standby antenna transmits the reference signal at a frequency of every n^{th} time" means that the standby antenna performs one reference signal transmission when n reference signal transmissions using the transmission antenna and the standby antenna are performed.

The baseband processor 15a of the mobile communication device 10a selects a pattern used to perform reference signal transmission. Hereinafter, this process performed by the baseband processor 15a is referred to as "pattern selection process." After performing the pattern selection process, the baseband processor 15a transmits the determination result as a pattern request signal (indicated by a circular mark in FIG. 4) to the base station device 20a.
When the baseband processor 23a of the base station device 20a receives the pattern request signal, the baseband processor 23a acknowledges the request. The baseband processor 23a transmits a pattern selection signal (indicated by a triangular mark in FIG. 4) as a signal for indicating a pattern to be used (the pattern selected by the pattern selection process) to the mobile communication device 10a. Upon receipt of the pattern selection signal, the mobile communication device 10a performs reference signal transmission in the indicated pattern.

In FIG. 4, first, the mobile communication device 10a operates in the first pattern, and the first antenna 11 operates as a transmission antenna. While the mobile communication device 10a is operating in each pattern, the baseband processor 15a performs the pattern selection process to select a next pattern. For example, when the mobile communication device 10a is operating in the first pattern, the baseband processor 15a performs the pattern selection process while the reference signal is being transmitted four times. In actual design, a timing of the pattern selection process is properly selected. However, a process of transmitting and receiving the pattern request signal and the pattern selection signal is performed after the pattern selection process is performed. Accordingly, the timing is designed in consideration of a time required for the process of transmitting and receiving the pattern request signal and the pattern selection signal.

In FIG. 4, in an initial pattern selection process, the baseband processor 15a determines that the second pattern is to be selected. Accordingly, the baseband processor transmits an initial pattern request signal including an indication that the second pattern is to be selected (a pattern request signal 401 in FIG. 4). Upon receipt of the pattern request signal, the baseband processor 23a of the base station device 20a transmits a pattern selection signal including an indication that the second pattern is selected (a pattern selection signal 411 in FIG. 4). Then, the mobile communication device 10a operates in the second pattern under control of the baseband processor 15a.

In FIG. 4, in a subsequent pattern selection process, the baseband processor 15a selects the second pattern. Accordingly, pattern request signals 402 to 404 include an indication that the second pattern is requested. Then, the baseband processor 23a of the base station device 20a compares quality indicators for reference signals transmitted from the first antenna 11 and the second antenna with each other, and determines that communication is to be performed using the second antenna. The baseband processor 23a transmits an antenna switching request signal 421 (indicated by an oblique line square in FIG. 4).
The baseband processor 15a switches the transmission antenna to the second antenna according to the antenna switching request signal received from the base station device 20a. In this case, in FIG. 4, the mobile communication device 10a operates in the second pattern.

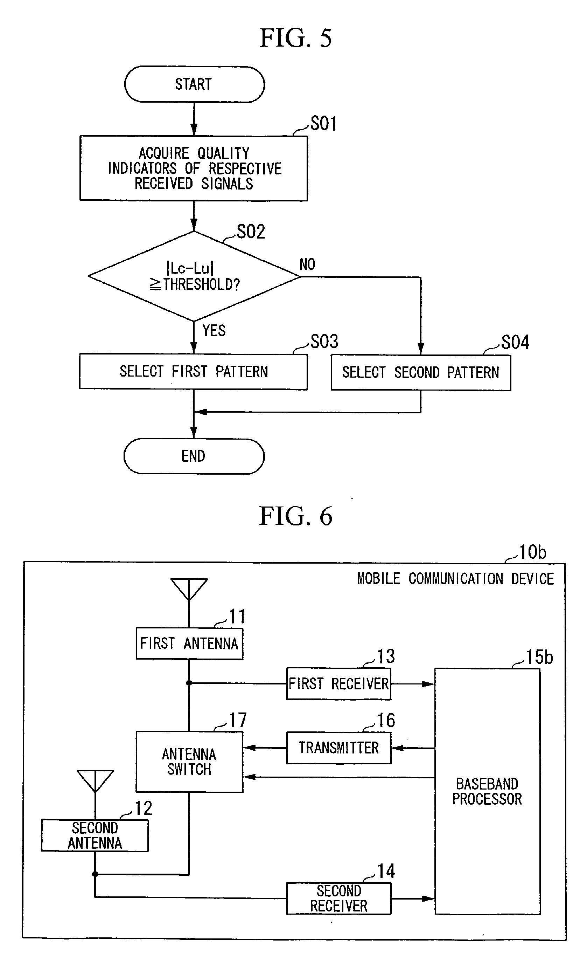

FIG. 5 is a flowchart showing an operation of the pattern selection process in the baseband processor 15a. Lc denotes a signal quality indicator when a downlink signal transmitted from the base station device 20a is received using the transmission antenna. Lu denotes a received signal quality indicator when the same signal is received using the standby antenna. The quality indicator may be any value indicating signal reception quality, such as a signal-to-noise ratio (SNR), a block error rate (BLER), or a received signal strength indicator (RSSI). Hereinafter, the operation of the pattern selection process in the baseband processor 15a will be described with reference to FIG. 5.

The baseband processor 15a acquires quality indicators of downlink signals received by the transmission antenna and the standby antenna (S01). The baseband processor 15a then compares the quality indicator Lc of the received signal at the transmission antenna with the quality indicator Lu of the received signal at the standby antenna (S02).

When a difference between Lc and Lu is determined to be equal to or greater than a threshold as the result of the comparison (S02-YES), the baseband processor 15a selects the first pattern and transmits a pattern request signal (S03). Specifically, the baseband processor 15a transmits the pattern request signal to the base station device 20a via the transmitter 16, using a data portion of a signal transmitted from the transmission antenna. Upon receipt of the pattern request signal, the base station device 20a acknowledges the request. Using a downlink data portion, the base station device 20a transmits a pattern selection signal for instructing the mobile communication device 10a to operate in the first pattern to the mobile communication device 10a. Upon receipt of the pattern selection signal, the baseband processor 15a of the mobile communication device 10a controls the transmitter 16 and the antenna switch 17 according to the instructed content and performs the reference signal transmission in the first pattern until a next pattern selection signal is received.

When the difference between Lc and Lu is equal to or greater than the threshold, i.e., when the reception quality at the transmission antenna is sufficiently higher than at the standby antenna, the likelihood of the transmission antenna being switched by the base station device 20a is low and the reference signal from the standby antenna need not be monitored at a high frequency. Even if the frequency of the reference signal transmissions from the standby antenna is reduced, a harmful effect is not caused. Conversely, a high frequency of the reference signal transmissions using the transmission antenna makes it possible to realize precise resource assignment or AMC for the transmission process using a current transmission antenna and to achieve high throughput.

On the other hand, when the difference between Lc and Lu is smaller than the threshold (S02-NO), the baseband processor 15a selects the second pattern and transmits a pattern request signal (S04). Specifically, the baseband processor 15a transmits a pattern request signal to the base station device 20a via the transmitter 16, using a data portion from the transmission antenna. When the base station device 20a receives the pattern request signal, the base station device 20a acknowledges the request and transmits a pattern selection signal for instructing the mobile communication device 10a to operate in the second pattern to the mobile communication device 10a, using a downlink data portion. Upon receipt of the pattern selection signal, the baseband processor 15a of the mobile communication device 10a controls the transmitter 16 and the antenna switch 17 according to the instructed content, and operates in the second pattern until a next pattern selection signal is received.

Thus, the baseband processor 15a determines whether the likelihood of the transmission antenna being switched (switching likelihood) is low, based on whether the difference between the quality indicator at the transmission antenna and the quality indicator at the standby antenna is great (equal to or greater than the threshold). Thus, the baseband processor 15a selects the transmission pattern for the reference signal based on the quality indicator difference.
Specifically, when the likelihood of the transmission antenna being switched by the base station device 20a is low (i.e., when the quality indicator difference is greater than the threshold), the baseband processor 15a selects a pattern in which the frequency of the reference signal transmissions using the standby antenna is low (the first pattern). On the other hand, when the likelihood of the transmission antenna being switched by base station device 20a is high (i.e., when the quality indicator difference is smaller than the threshold), the baseband processor 15a selects a pattern in which the frequency of the reference signal transmissions using the standby antenna is high (the second pattern). The baseband processor 15a transmits the reference signal according to the selected pattern.
However, the present invention is not limited to such a concrete method in designing the mobile communication system 100a. Other methods will be described as modifications.

According to this configuration, when the likelihood of the transmission antenna being switched is low, the frequency of the reference signal transmissions using the standby antenna is controlled to be low. When the frequency of the reference signal transmissions using the standby antenna is low, the accuracy of recognition of a radio communication environment of the standby antenna by the base station device 20a is normally degraded, and a timing when the transmission antenna is switched is adversely affected. However, when the likelihood of the transmission antenna being switched is low, such an adverse effect is less likely to be caused. On the other hand, when the frequency of the reference signal transmissions using the standby antenna is low, the frequency of reference signal transmissions using the transmission antenna becomes relatively high. This improves the accuracy of the recognition of a radio communication environment in the transmission antenna by the base station device 20a. Thus, it is possible to improve the accuracy of the resource assignment or the AMC control and to suppress deterioration of communication quality due to reference signal transmissions using the standby antenna.

### [Modification of the first embodiment]

Any method may be used to transmit and receive the pattern request signal and the pattern selection signal. For example, any one or both of the pattern request signal and the pattern selection signal may be transmitted and be received using an upper layer message. Any one or both of the pattern request signal and the pattern selection signal may be transmitted and be received by indicating a pattern in a bit stream on a lower layer. In this case, since there are two patterns in the present embodiment, the selected pattern can be represented by only one bit of the lower layer.
The mobile communication system 100a may be configured to transmit and receive the pattern request signal and the pattern selection signal only when the transmission pattern for the reference signal is desired to be changed. In this case, for example, in FIG. 4, the pattern request signals 402 to 405 and the pattern selection signals 412 and 413 are not transmitted and received. According to this configuration, it is possible to improve throughput in the mobile communication system 100a by reducing the number of transmitted and received signals.

In the present embodiment described above, although the mobile communication device 10a include two antennas and the base station device 20a includes one antenna, the number of the antennas of each device is not limited thereto. Accordingly, the mobile communication device 10a may be configured to have three or more antennas, and the base station device 20a may be configured to have two or more antennas.
When the mobile communication device 10a has three or more antennas, there may be a plurality of standby antennas. In this case, as the transmission pattern for the reference signal, a pattern in which the reference signal is transmitted from all the standby antennas may be provided, or a pattern in which the reference signal is transmitted from only some of the standby antennas (e.g., standby antennas with a high quality indicator) may be provided. When the pattern in which the reference signal is transmitted only from some of the standby antennas is provided, the baseband processor 15a compares quality indicators between the standby antennas, as well as compares quality indicators between the standby antenna and the transmission antenna. The baseband processor 15a selects a standby antenna which transmits the reference signal based on the comparison result.

In the present embodiment described above, although the two transmission patterns for the reference signal are prepared, the number of the patterns is not limited to two. When three or more patterns are prepared, two or more thresholds may be prepared corresponding to these patterns.
In the present embodiment described above, only the patterns in which the reference signal is transmitted from the standby antenna have been applied, such as every fourth time in the first pattern and every second time in the second pattern. On the other hand, a pattern in which the reference signal is not transmitted from the standby antenna may be applied. For example, in the first pattern, the reference signal may not be transmitted from the standby antenna, and in the second pattern, the reference signal may be transmitted from the standby antenna at a frequency of every second time. According to this configuration, it is possible to further increase the frequency of the reference signal transmissions using the transmission antenna and to realize more precise resource assignment or AMC for high throughput in a transmission process using a current transmission antenna.

In the present embodiment described above, a plurality of patterns are prepared in advance and any one of the patterns is selected to determine a reference signal transmission cycle in each antenna. Alternatively, the transmission cycle may be directly indicated by the mobile communication device 10a or the base station device 20a. The cycle may be determined, for example, from the difference between Lu and Lc or using a table having a relationship between the difference between Lu and Lc and the cycle.
Following the cycle determination, for example, in the case of every second time, "2" may be transmitted as the pattern request signal or the pattern selection signal, and in the case of every eighth time, "8" may be transmitted. In this case, when a figure equal to or greater than "3" is transmitted, a timing within the cycle when the reference signal is to be transmitted using the standby antenna is required to be indicated. For example, when the reference signal is transmitted from the standby antenna at a frequency of every eighth time and the position of the timing is a third position (i.e., two reference signal transmissions using the transmission antenna are completed and the reference signal is transmitted from the standby antenna at a next timing), "8" as the cycle and "3" as the position may be transmitted. According to this configuration, it is possible to realize more flexible control and improve the throughput.

Parameters, the cycle and the position, may not be sent directly, but indices corresponding to the parameters may be sent instead of the parameters. In this case, a correspondence relationship between the parameter and the index may be stored in a read-only memory device of each of the base station device 20a and the mobile communication device 10a in advance. Alternatively, communication may be performed between the base station device 20a and the mobile communication device 10a, in advance, to store the correspondence relationship between the parameter and the index based on the communication. In this case, the correspondence relationship between the parameter and the index may be set by any one of the base station device 20a and the mobile communication device 10a.

In the present embodiment described above, the mobile communication device 10a measures the reception quality difference between the antennas to determine the pattern upon receipt of a downlink (transmission from the base station device 20a to the mobile communication device 10a). Alternatively, the base station device 20a may make such a determination. For example, the base station device 20a may measure a quality indicator for a received reference signal in an uplink (transmission from the mobile communication device 10a to the base station device 20a) to make the determination.
Specifically, when the difference in the reception quality of the uplink reference signals between the antennas is greater than the above-described threshold, the base station device 20a selects the first pattern, and when the reception quality difference is smaller than the threshold, the base station device 20a selects the second pattern. The base station device 20a transmits a pattern selection signal for the selected pattern to the mobile communication device 10a. Such a process in the base station device 20a is performed by the baseband processor 23a.
Thus, the signal quality indicator for determining the timing of reference signal transmission at the standby antenna is not necessarily limited to the received signal quality indicator in the downlink. That is, any signal quality indicator may be applied as long as it indicates a radio communication environment in each antenna.

In the present embodiment described above, a process of synchronizing the selected pattern between the mobile communication device 10a and the base station device 20a is performed by transmission of the pattern request signal from the mobile communication device 10a to the base station device 20a and then transmission of the pattern selection signal from the base station device 20a to the mobile communication device 10a. Alternatively, other methods of synchronizing the pattern may be used. For example, when the pattern is selected in the mobile communication device 10a, the pattern may be synchronized only by the mobile communication device 10a transmitting the pattern selection signal. When the pattern is selected in the base station device 20a, the pattern may be synchronized only by the base station device 20a transmitting the pattern selection signal. When the pattern is selected in the base station device 20a, the pattern may be synchronized by the base station device 20a first transmitting the pattern request signal and then by the mobile communication device 10a transmitting the pattern selection signal.

The base station device 20a may recognize an antenna according to each reference signal using the following method without performing the pattern synchronization. The baseband processor 15a of the mobile communication device 10a transmits a reference signal including an antenna identifier. The baseband processor 23a of the base station device 20a recognizes an antenna used for the reference signal transmission by referring to the antenna identifier included in the received reference signal, and determines whether the antenna is to be switched. According to this configuration, the base station device 20a can recognize the antenna transmitting the reference signal without performing the process of transmitting the pattern request signal or the process of transmitting the pattern selection signal. Accordingly, it is possible to reduce a processing time required for the process of transmitting and receiving the pattern request signal and the pattern selection signal, thereby improving the throughput. Further, the baseband processor 23 of the base station device 20a may recognize an antenna from which the reference signal is transmitted, based on, for example, a reference signal transmission time or frequency determined in advance to be different among the antennas used for the reference signal transmission, instead of the antenna identifier. Such a configuration may be realized, for example, by multiplying the reference signal by a code and changing the code.

### [Second embodiment]

In the first embodiment described above, a plurality of patterns are prepared in advance for the reference signal transmissions using the standby antenna, and any one of the plurality of patterns is selected to determine the reference signal transmission timing. On the other hand, in a second embodiment, a determination is made as to whether the reference signal is transmitted from the standby antenna, at predetermined intervals, and a reference signal transmission timing is determined based on the determination. A mobile communication system 100b according to the second embodiment will be described. Since the mobile communication system 100b has the same network architecture as the mobile communication system 100a shown in FIG. 1, a description of the mobile communication system 100b will be omitted.

The mobile communication system 100b (the second embodiment) includes a mobile communication device 10b and a base station device 20b. The mobile communication device 10b differs from the mobile communication device 10a only in that the mobile communication device 10b determines whether a reference signal is transmitted from the standby antenna. The base station device 20b differs from the base station device 20a only in that a timing for reference signal transmission using the standby antenna is recognized based on a reference signal transmission request transmitted from the mobile communication device 10b. Hereinafter, differences between the two embodiments will be primarily described. However, in the base station device 20b, a received signal used for a process in a baseband processor 23b differs from that in the baseband processor 23a, as described above. Accordingly, only the differences will be described and a detailed description using drawings will be omitted.

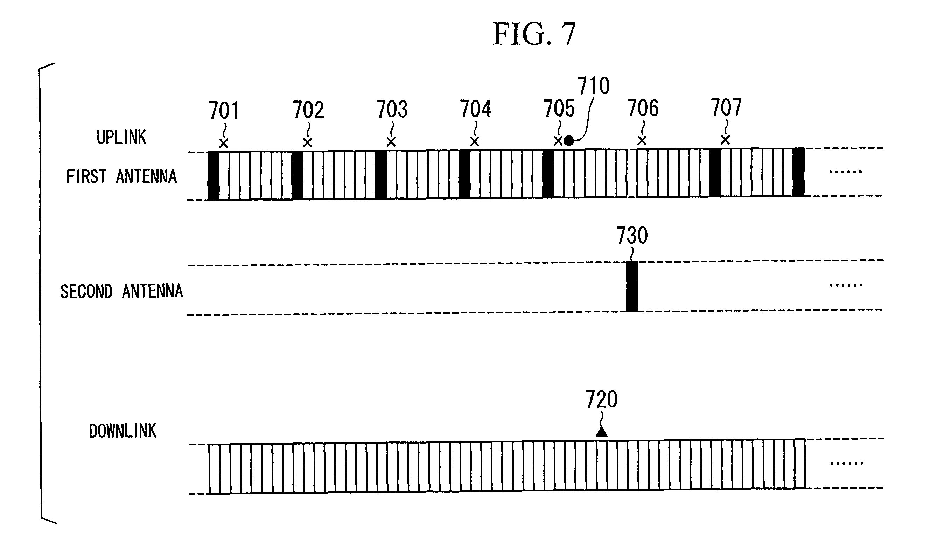

FIG. 6 is a schematic functional block diagram of the mobile communication device 10b. The baseband processor 15b of the mobile communication device 10b does not select one of a plurality of patterns, but determines whether the reference signal is transmitted from the standby antenna. Accordingly, the baseband processor 15b does not require transmission patterns for the reference signal. Accordingly, the baseband processor 15b does not have a pattern storage unit 151, unlike the baseband processor 15a.
The baseband processor 15b determines whether the reference signal is transmitted from the standby antenna, at predetermined intervals. Hereinafter, this process is referred to as "a process of determining whether to use a standby antenna." The baseband processor 15b performs the process of determining whether to use a standby antenna, based on a difference between signal quality indicators received using the transmission antenna and the standby antenna. When the mobile communication device 10b performs the process of determining whether to use a standby antenna and determines that the reference signal is transmitted from the standby antenna, the mobile communication device **10b** transmits a reference signal transmission request to the base station device 20b.
A reference signal transmission operation of the mobile communication system 100b will be described. FIG. 7 shows an example of the reference signal transmission operation in the mobile communication system 100b. In FIG. 7, reference signal transmission timings are indicated by black squares.

In FIG. 7, first, a first antenna 11 of the mobile communication device 10b operates as a transmission antenna. The baseband processor 15b performs the process of determining whether to use a standby antenna at a next timing when the reference signal is transmitted (indicated by a cross mark in FIG. 7). When the baseband processor 15b determines that the reference signal does not have to be transmitted using the standby antenna (the process of determining whether to use a standby antenna at 701 to 704), the baseband processor 15b does not transmit the reference signal transmission request. The baseband processor 15b transmits the reference signal using the transmission antenna even at a next timing when the reference signal is transmitted.
On the other hand, when the baseband processor 15b determines whether the reference signal is to be transmitted using the standby antenna (the process of determining whether to use a standby antenna at 705), the baseband processor 15b transmits a reference signal transmission request 710 (indicated by a black circular mark in FIG. 7).

When the baseband processor 23b of the base station device 20b receives the reference signal transmission request, the baseband processor 23b acknowledges the request and transmits an acknowledgment signal 1720 (indicated by a black triangular mark in FIG. 7). When the mobile communication device 10b receives the acknowledgment signal, the mobile communication device 10b transmits a reference signal 730 from the standby antenna at a next reference signal transmission timing. Then, the baseband processor 15b regularly performs the process of determining whether to use a standby antenna (the process of determining whether to use a standby antenna at 706 and 707) while continuing to transmit the reference signal from the transmission antenna, as described above.

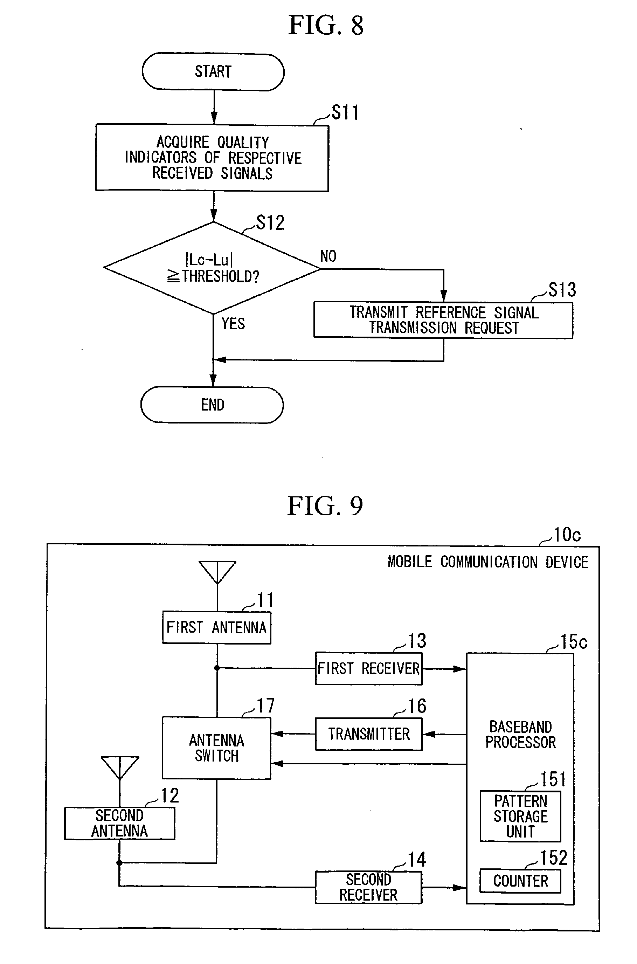

FIG. 8 is a flowchart showing an operation of a process performed in the baseband processor 15b. In FIG. 8, Lc denotes a received signal quality indicator when a downlink signal from the base station device 20b is received at the transmission antenna. Lu indicates a received signal quality indicator when the same signal is received at the standby antenna. The operation of the process in the baseband processor 15b will be described with reference to FIG. 8.
The baseband processor 15b acquires quality indicators of downlink signals received at the transmission antenna and the standby antenna (S11). The baseband processor 15b then compares the quality indicator (Lc) of the received signal at the transmission antenna with the quality indicator (Lu) of the received signal at the standby antenna (S12).

When the difference between Lc and Lu is determined to be equal to or greater than a threshold as the result of the comparison (S12-YES), the baseband processor 15b does not transmit a reference signal transmission request. On the other hand, when the difference between Lc and Lu is smaller than the threshold (S12-NO), the baseband processor 15b determines that the reference signal is to be transmitted from the standby antenna, and transmits the reference signal transmission request to the base station device 20b (S 13).
A concrete example of a method of transmitting the reference signal transmission request and an acknowledgment signal will be described. The baseband processor 15b transmits the reference signal transmission request to the base station device 20b via the transmitter 16, using a data portion from the transmission antenna. The base station device 20b transmits an acknowledgment signal using a downlink data portion.

Thus, the baseband processor 15b determines whether the likelihood of the transmission antenna being switched (switching likelihood) is low, like the baseband processor 15a. However, when the switching likelihood is high, i.e., when the quality indicator of the transmission antenna and the standby antenna exceeds the threshold, the baseband processor 15b does not perform the reference signal transmission using the standby antenna. Such an operation can be realized, particularly, without causing problems since communication using the transmission antenna is stable and the likelihood of the antenna being switched is low when the quality indicator exceeds the threshold. The baseband processor 15b does not perform the reference signal transmission using the standby antenna, but can transmit the reference signal using the transmission antenna. Accordingly, it is possible to increase the frequency of the reference signal transmissions using the transmission antenna without deviating from the transmission antenna switching timing. Therefore, resource assignment or AMC control can be accurately performed and high throughput can be realized.

### [Modification of the second embodiment]

In the present embodiment described above, each time the quality indicator difference is smaller than the threshold, the reference signal is transmitted once from the standby antenna. Alternatively, each time the quality indicator difference is smaller than the threshold, a plurality of reference signal transmissions using the standby antenna may be performed. For example, a plurality of continuous reference signal transmissions using the standby antenna may be performed at the reference signal transmission timing. Alternatively, the standby antenna and the transmission antenna may alternately perform a plurality of reference signal transmissions.
Any one or both of the reference signal transmission request and the acknowledgment signal may be transmitted and be received using an upper layer message. Alternatively, any one or both of the reference signal transmission request and the acknowledgment signal may be transmitted as 1-bit data indicating the signal on a lower layer.

Although the mobile communication device 10b includes two antennas and the base station device 20b includes one antenna in the present embodiment described above, the number of the antennas is not limited thereto. Accordingly, the mobile communication device 10b may be configured to have three or more antennas, and the base station device 20b may be configured to have three or more antennas.
When there are a plurality of standby antennas as the mobile communication device 10b has three or more antennas, the baseband processor 15b may include information indicating a standby antenna from which the reference signal is transmitted, in the reference signal transmission request. The information may be represented by a bit stream assigned to each antenna. For example, when the mobile communication device 10b includes four antennas, the reference signal transmission request may be formed as a 2-bit signal to directly designate a used antenna. In this case, the baseband processor 15b may be configured to designate an antenna having the highest signal quality among the standby antennas.

Where there are a plurality of standby antennas as described above, the baseband processor 15b may be configured, particularly, to perform the reference signal transmission from the respective standby antennas in a given order, instead of designating a used standby antenna. For example, the baseband processor 15b may be configured to transmit the reference signal from the respective standby antennas by switching the standby antennas in order after transmitting the reference signal transmission request and receiving the acknowledgment signal. In this case, an order of using the standby antennas is synchronized in the base station device 20b and the mobile communication device 10b in advance.
Further, a timing when the process of determining whether to use a standby antenna is performed is not limited to the above-described timing. Accordingly, the timing may have a longer cycle than the reference signal transmission timing.

### [Third embodiment]

In the first embodiment described above, the process of transmitting and receiving a signal specific to the control of the timing when the reference signal is transmitted using the standby antenna (e.g., the pattern request signal or the pattern selection signal) is performed each time the first pattern or the second pattern is selected. On the other hand, in a mobile communication system 100c (a third embodiment), a pattern switching trigger is used so that a pattern is switched without causing the transmission and reception of the signal specific to the control of the timing when the reference signal is transmitted using the standby antenna. The mobile communication system 100c according to the third embodiment will be described. Since the mobile communication system 100c has the same network architecture as the mobile communication system 100c shown in FIG. 1, a description of the network architecture of the mobile communication system 100c will be omitted.
The mobile communication system 100c includes a mobile communication device 10c and a base station device 20c. The mobile communication device 10c differs from the mobile communication device 10a only in that the mobile communication device 10c includes a baseband processor 15c instead of the baseband processor 15a. The base station device 20c differs from the base station device 20a in that the base station device 20c includes a baseband processor 23c instead of the baseband processor 23a. Hereinafter, differences between the two embodiments will be primarily described.

In the present embodiment, the baseband processor 15c of the mobile communication device 10c and the baseband processor 23c of the base station device 20c have patterns for the timing when the reference signal is transmitted from the standby antenna. For example, the baseband processor 15c and the baseband processor 23c have the same first and second patterns as in the first embodiment. The baseband processor 15c and the baseband processor 23c also have a trigger related to pattern switching. Each pattern and the trigger may be included in the mobile communication device 10c and the base station device 20c in advance, and synchronization may be performed by notification from one of the devices to the other when radio communication is performed.

The mobile communication device 10c and the base station device 20c have a trigger to switch from the first pattern to the second pattern (hereinafter, referred to as "first trigger"), and a trigger to switch from the second pattern to the first pattern (hereinafter, referred to as "second trigger"). In this case, the first trigger is a trigger for when the frequency of reference signal transmissions using the standby antenna is high, and the second trigger is a trigger for when the frequency is low. Accordingly, an event occurring when the likelihood of the transmission antenna being switched is high, i.e., when the quality indicator difference between the transmission antenna and the standby antenna is estimated to be small, is applied to the first trigger. For example, transmission and reception of the antenna switching request signal (i.e., switching of the transmission antenna) may be used as the first trigger. This is because the quality indicator difference is small and the likelihood of the transmission antenna being switched again is high directly after the transmission antenna is switched.
Further, an event occurring when the likelihood of the transmission antenna being switched is low, i.e., when the quality indicator difference between the transmission antenna and the standby antenna is estimated to be great, is applied to the second trigger. For example, the elapse of a predetermined period of time from transmission and reception of the antenna switching request signal or a given number of reference signal transmissions after the transmission and reception of the antenna switching request signal may be used as the second trigger.

FIG. 9 is a schematic functional block diagram of the mobile communication device 10c. The baseband processor 15c of the mobile communication device 10c includes a counter 152. The baseband processor 15c uses a given number of reference signal transmissions from the standby antenna after the transmission antenna is switched, as the second trigger described above. The counter 152 counts the number of the reference signal transmissions from the standby antenna after the transmission antenna is switched.

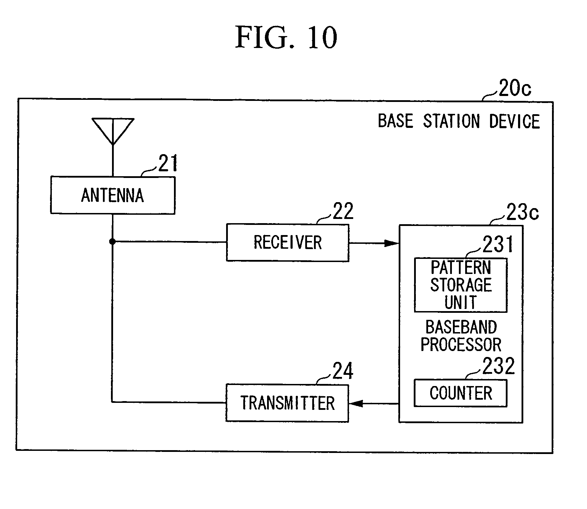

FIG. 10 is a schematic functional block diagram of the base station device 20c. The baseband processor 23c of the base station device 20c includes a pattern storage unit 231 and a counter 232. The baseband processor 23c has the same pattern and trigger as in the mobile communication device 10c. Accordingly, the pattern storage unit 231 stores the first pattern and the second pattern described above. The counter 232 counts the number of the reference signal transmissions from the standby antenna (in other words, a number of times the reference signal is received) after the transmission antenna is switched.

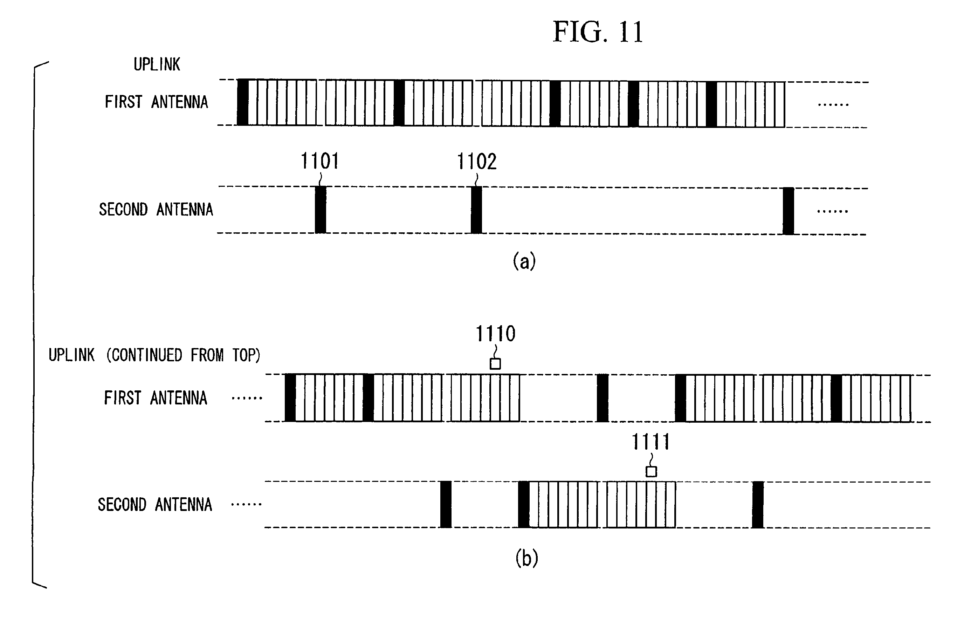

FIGS. 11(a) and (b) show an example of a reference signal transmission operation in the mobile communication system 100c. In FIGS. 11(a) and (b), reference signal transmission timings are indicated by black squares. The reference signal transmission operation in the mobile communication system 100c will be described with reference to FIGS. 11(a) and (b).
In FIGS. 11(a) and (b), the first trigger is a process of switching the transmission antenna. The second trigger is a second reference signal transmission from the standby antenna during the second pattern. When the first trigger is generated during the second pattern, the number of the reference signal transmissions from the standby antenna is counted starting from zero again.

In FIG. 11(a), the process of switching the transmission antenna has been performed, although not shown, and the baseband processor 15c uses the first antenna as the transmission antenna. The process of switching the transmission antenna becomes the first trigger, and the baseband processor 15c initiates the second pattern. In this case, the baseband processor 23c of the base station device 20c recognizes the initiation of the second pattern based on the antenna switching request signal transmitted by the baseband processor 23c.
Reference signals 1101 and 1102 are then transmitted from the standby antenna without the occurrence of the transmission antenna switching process. The baseband processor 15c switches the pattern from the second pattern to the first pattern using the two reference signal transmissions as the second trigger. In the base station device 20c, the baseband processor 23c recognizes the switching to the first pattern using the two reference signal receptions as the second trigger. The baseband processor 15c then transmits the reference signal in the first pattern until the transmission antenna is newly switched.

FIG. 11 (b) will be described. In FIG. 11 (b), the baseband processor 15c uses the first antenna as the transmission antenna and operates in the first pattern. Then, the base station device 20c transmits an antenna switching request signal, which is received by the mobile communication device 10c (timing 1110). The baseband processor 15c and the baseband processor 23c initiate the operation in the second pattern using the transmission and reception of the antenna switching request signal as the first trigger. Further, the baseband processor 15c uses the second antenna as the transmission antenna.
Next, before the second reference signal is transmitted from the standby antenna, the base station device 20c transmits an antenna switching request signal, which is received by the mobile communication device 10c (timing 1111). The baseband processor 15c and the baseband processor 23c reset the counter which counts the number of reference signal transmissions using the standby antenna based on the transmission and reception of the antenna switching request signal.

Then, the baseband processor 15c and the baseband processor 23c count the number of the reference signal transmissions using the standby antenna. When the reference signal is transmitted twice using the standby antenna without the occurrence of the antenna switching process, the baseband processor 15c and the baseband processor 23c switch the pattern using the completion of the two transmissions as the second trigger.

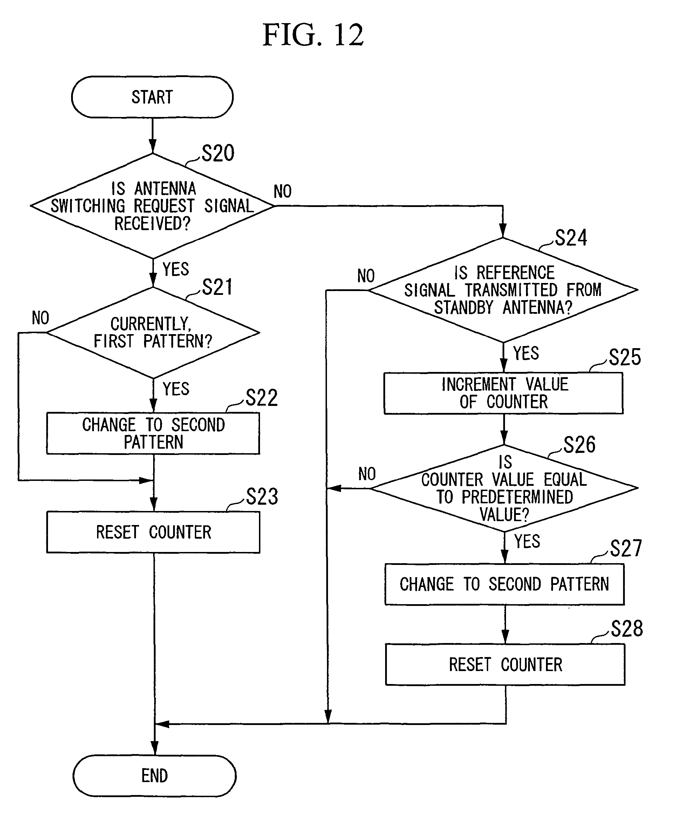

FIG. 12 is a flowchart showing an operation of controlling the transmission pattern for the reference signal in a process performed by the baseband processor 15c. When the baseband processor 15c receives an antenna switching request signal (S20-YES) and currently operates in the first pattern (S21-YES), the baseband processor 15c switches the transmission pattern for the reference signal to the second pattern using the receipt of the antenna switching request signal and the operation in the first pattern as the first trigger (S22). The baseband processor 15c then resets a counter which counts the number of reference signal transmissions using the standby antenna (S23). On the other hand, when the baseband processor 15c currently operates in the second pattern (S21-NO), the baseband processor 15c resets the counter without switching the pattern (S23).
When the baseband processor 15c does not receive the antenna switching request signal (S20-NO) and the reference signal is transmitted from the standby antenna (S24-YES), the baseband processor 15c increments the value of the counter (S25). The baseband processor 15c determines whether the incremented counter value exceeds a predetermined value ("2" in FIGS. 11(a) and (b)) (S26). When the counter value exceeds the predetermined value (S26-YES), the baseband processor 15c switches the transmission pattern for the reference signal to the first pattern using the excess as the second trigger (S27). The baseband processor 15c then resets the counter (S28).

The foregoing is a process in which the baseband processor 15c determines the transmission pattern for the reference signal. In addition to this process, the baseband processor 15c performs, for example, a transmission antenna switching process or a reference signal transmission process. Processes related to the pattern and trigger are the same between the baseband processor 15c and the baseband processor 23c, with the only differences being signal transmission and signal reception. Therefore, a description of the operation of the baseband processor 23c will be omitted.
According to the present embodiment, the base station device 20c and the mobile communication device 10c switch the pattern without transmitting and receiving a signal (e.g., a pattern request signal, a pattern selection signal, or a reference signal transmission request) specific to timing control for reference signal transmission using the standby antenna. Accordingly, it is possible to reduce a time required for transmission and reception of such a signal and improve the throughput.

In general, there is no substantial difference in signal quality between the transmission antenna and the standby antenna, directly after the transmission antenna is switched. Accordingly, a pattern in which a cycle of a reference signal transmission timing in the standby antenna is short is selected so that the base station device 20c can properly select the transmission antenna.
Further, when a given period of time lapses without the occurrence of the transmission antenna switching process (in FIGS. 11 (a) and (b), when the second reference signal is transmitted from the standby antenna), signal quality at the current transmission antenna is estimated as being stable. Accordingly, in such a case, since the likelihood of the antenna being switched is low, the pattern in which the frequency of reference signal transmissions using the standby antenna is low (i.e., the frequency of the reference signal transmissions using the transmission antenna is high) is selected and AMC control is preferentially performed, such that erroneous transmission antenna switching does not occur and high throughput can be realized.

### [Modification of the third embodiment]

A plurality of transmission patterns for the reference signal may be provided, and the number of the transmission patterns is not limited. For example, the reference signal is transmitted from the standby antenna at a pace of every n^{th} time, and when a given number (e.g., two times or 2/n times) of the reference signal transmissions from the standby antenna have been performed, the n value may be controlled to increase according to a given increase rate (e.g., n+1 or 2n). This control is performed by the baseband processor 15c and the baseband processor 23c.
Further, the switching timing need not be based only on the number of reference signal transmissions using the standby antenna. For example, the switching timing may be based on a given number of transmissions, including the number of reference signal transmissions using the transmission antenna.

### [Fourth embodiment]

In the first embodiment described above, the likelihood of the transmission antenna being switched is determined based on the quality indicator of the received signal in an uplink or downlink. On the other hand, in a fourth embodiment of the present invention, a moving speed of the mobile communication device is measured and the likelihood of the transmission antenna being switched is determined based on the moving speed. A mobile communication system 100d according to the fourth embodiment of the present invention will be described. Since the mobile communication system 100d has the same network architecture as the mobile communication system 100a shown in FIG. 1, the network architecture of the mobile communication system 100d will be omitted.

The mobile communication system 100d (the fourth embodiment) includes a mobile communication device 10d and a base station device 20d. The mobile communication system 100d will be described. However, since the base station device 20d has substantially the same configuration as the base station device 20a, only differences between the base station device 20d and the base station device 20a will be described and a detailed description using the drawings will be omitted.

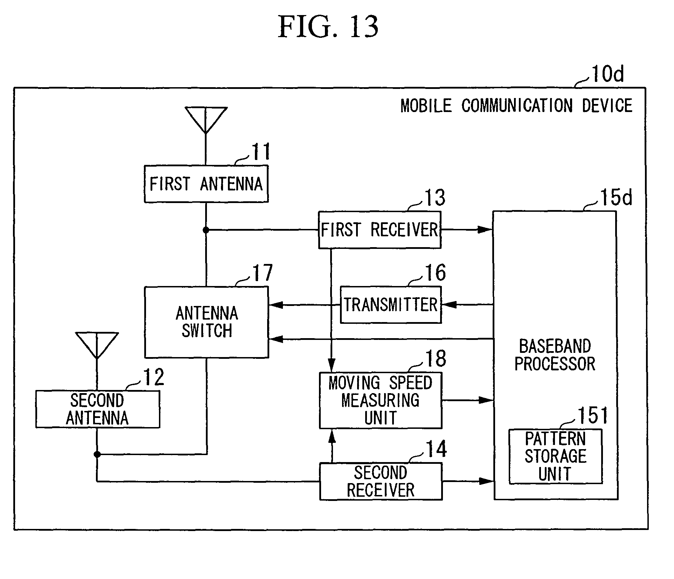

FIG. 13 is a schematic functional block diagram of the mobile communication device 10d. The mobile communication device 10d differs from the mobile communication device 10a in that the mobile communication device 10d further includes a moving speed measuring unit 18, and includes a baseband processor 15d instead of the baseband processor 15a. The baseband processor 15d differs from the baseband processor 15a in that the pattern for the reference signal is selected based on a moving speed. The baseband processor 15d also differs from the baseband processor 15a in that a pattern request signal is not transmitted when the reference signal pattern is selected, but only when the pattern is switched. Other portions of the mobile communication device 10d are the same as those of the mobile communication device 10a.
The baseband processor 23d of the base station device 20d differs from the baseband processor 23a of the base station device 20a only in that when the pattern request signal is not received, it is determined that the reference signal is transmitted in a previous pattern. Hereinafter, a difference between the mobile communication system 100d and the mobile communication system 100a will be mainly described.

The moving speed measuring unit 18 receives a signal from which the moving speed can be measured, from a first receiver 13 and a second receiver 14. An example of the signal from which the moving speed can be measured includes phase information with a data modulation component of a known signal (e.g., a reference signal for data demodulation) removed at a state where synchronization is not detected. The moving speed measuring unit 18 acquires such phase information and obtains phase dispersion such that the moving speed can be obtained using a nature that the phase dispersion increases with faster movement. The method of measuring the moving speed in the moving speed measuring unit 18 is not limited to the above-described method, and any other method capable of measuring the moving speed of the mobile communication device 10d may be applied. The moving speed measuring unit 18 outputs the obtained moving speed to the baseband processor 15d.

The baseband processor 15d has a pattern storage unit 151. Content (the first pattern and the second pattern) stored in the pattern storage unit 151 is the same as that stored in the pattern storage unit 151 of the baseband processor 15a. The baseband processor 15d also stores a threshold for the moving speed. When the moving speed is greater than the threshold, the baseband processor 15d selects the second pattern. On the other hand, when the moving speed is smaller than the threshold, the baseband processor 15d selects the first pattern. When the selected pattern differs from a current pattern, the baseband processor 15d transmits a pattern request signal to the base station device 20d in order to switch the pattern. The pattern request signal is transmitted using a data portion transmitted from the transmission antenna.
The baseband processor 23d of the base station device 20d can determine a timing when the reference signal is transmitted from the standby antenna, by obtaining the pattern request signal.

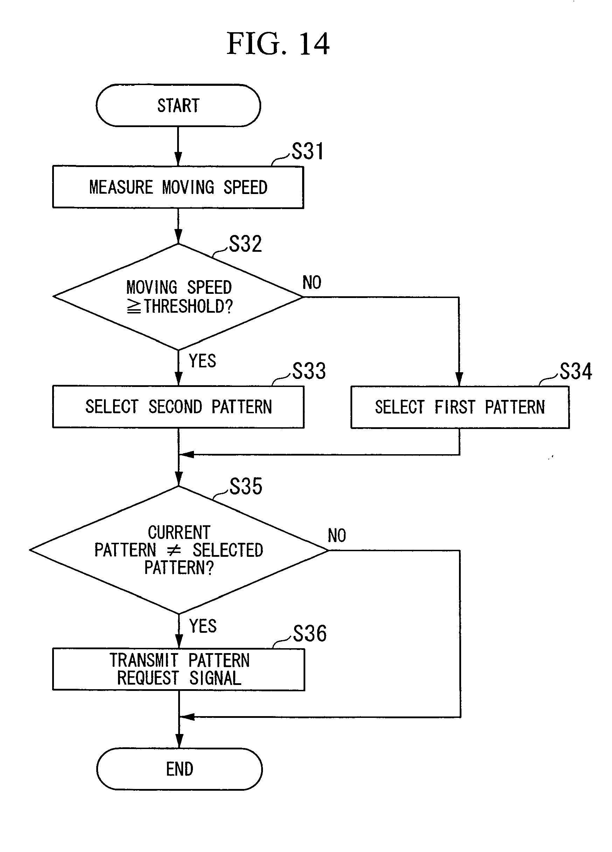

FIG. 14 is a flowchart showing an operation of a process in the mobile communication device 10d. An operation of the mobile communication device 10d will be described with reference to FIG. 14. The moving speed measuring unit 18 measures a moving speed of the mobile communication device 10d (S31). The moving speed measuring unit 18 then outputs the measured moving speed to the baseband processor 15d.
The baseband processor 15d determines whether the input moving speed is greater than a threshold (S32). When the input moving speed is greater than the threshold (S32-YES), the baseband processor 15d selects the second pattern (S33). On the other hand, when the moving speed is smaller than the threshold (S32-NO), the baseband processor 15d selects the first pattern (S34). Next, the baseband processor 15d determines whether the selected pattern is different from a current pattern (S35). When the selected pattern is the same as the current pattern (S35-NO), the baseband processor 15d terminates the process. On the other hand, when the selected pattern is different from the current pattern (S35-YES), the baseband processor 15d transmits the pattern request signal to the base station device 20d (S36). This process is repeated at predetermined intervals.
According to the mobile communication device 100d configured as above, the switching likelihood is estimated based on the moving speed. That is, when the moving speed is high, a radio communication environment is deteriorated and the likelihood of the transmission antenna being switched may be estimated to be high. When the moving speed is high (i.e., when the measured moving speed is equal to or greater than the threshold), it is possible to properly perform transmission antenna switching by increasing the frequency of the reference signal transmissions from the standby antenna.
On the other hand, when the moving speed is low, the radio communication environment is stable and the likelihood of the transmission antenna being switched may be estimated to be low. When the moving speed is low (i.e., when the measured moving speed is smaller than the threshold), transmission antenna switching is not adversely affected by a low frequency of the reference signal transmissions from the standby antenna. As the frequency of the reference signal transmission from the standby antenna is low, the frequency of reference signal transmissions of the transmission antenna becomes relatively high. This makes it possible for the base station device 20d to accurately recognize a radio communication environment in the transmission antenna. Accordingly, it is possible to improve the accuracy of resource assignment or AMC control and to suppress deterioration of communication quality due to the reference signal transmissions using the standby antenna.

### [Modification of the fourth embodiment]

The pattern selection process based on the moving speed may also be performed in the base station device 20d. In this case, the moving speed measuring unit 18 may notify the base station device 20d of the measured moving speed. The moving speed measuring unit may be included in the base station device 20d to measure the moving speed.
The modification of the first embodiment or the second embodiment may be applied to the present embodiment. Further, the process of the baseband processor 15a or the baseband processor 15b in the first embodiment or the second embodiment may be combined with the process of the baseband processor 15d in the present embodiment. For example, the selection of the transmission pattern for the reference signal or the necessity of the reference signal transmission from the standby antenna may be determined based on the quality indicator of the received signal and the moving speed.

The functions of some components of the mobile communication devices 10a to 10d and the base station device 20a to 20d, such as the baseband processors 15a to 15d or the baseband processor 23a to 23d in the embodiments described above may be realized by a computer. In this case, a program for realizing the functions may be recorded on a computer-readable recording medium, and may be read and executed by the computer system. The "computer system" includes an operating system (OS) or hardware such as peripheral devices. The "computer-readable recording medium" includes a storage unit, including a portable medium such as a flexible disk, a magnetic optical disk, a ROM, or a CD-ROM, and a hard disk embedded in the computer system. Further, the "computer-readable recording medium" may include a medium for temporarily and dynamically storing programs, like a communication line when a program is transmitted via a network such as the Internet or a communication line such as a telephone line, and a medium for storing programs for a predetermined time, like a volatile memory inside a computer system consisting of a server and a client in that case. The program may be a program for realizing some of the above-described functions. Alternatively, the program may be a program capable of realizing the above-described functions through a combination with a program previously stored in a computer system.
Although the embodiments of the present invention have been described in detail with reference to the accompanying drawings, concrete configurations are not limited to the embodiments, and include designs that do not depart from the scope of the invention.

### Industrial applicability

The present invention can be used to control radio communication between the base station device and the mobile communication device.

## Claims

1. A mobile communication device comprising:
a plurality of antennas which transmit and receive a radio signal;
and
a baseband processor which selects a transmission antenna used for data signal transmission from the plurality of antennas based on an instruction from a base station device, and transmits a data signal using the transmission antenna,
wherein the baseband processor determines a timing when a reference signal is transmitted using a standby antenna not used for the data signal transmission based on the likelihood of the transmission antenna being switched and transmits the reference signal based on the determined timing.

2. The mobile communication device according to claim 1, wherein the baseband processor determines the timing such that the frequency of reference signal transmissions from the standby antenna is low when the switching likelihood is low, and determines the timing such that the frequency of the reference signal transmissions from the standby antenna is high when the switching likelihood is high.

3. The mobile communication device according to claim 1 or 2, wherein the baseband processor has a plurality of patterns for the timing when the reference signal is transmitted using the standby antenna, determines the switching likelihood based on a difference in signal quality between the transmission antenna and the standby antenna, selects a pattern in which the frequency of the reference signal transmissions from the standby antenna is low when the difference in signal quality between the transmission antenna and the standby antenna is great, selects a pattern in which the frequency of the reference signal transmission from the standby antenna is high when the difference is small, and transmits the reference signal based on the selected pattern.

4. The mobile communication device according to claim 1 or 2, wherein the baseband processor determines the switching likelihood based on a difference in signal quality between the transmission antenna and the standby antenna, and transmits the reference signal from the standby antenna when the difference in signal quality between the transmission antenna and the standby antenna is smaller than a threshold.

5. The mobile communication device according to claim 1 or 2, wherein the baseband processor has a plurality of patterns for the timing when the reference signal is transmitted using the standby antenna, determines the switching likelihood based on occurrence of the transmission antenna switching process, selects a pattern in which the frequency of the reference signal transmissions from the standby antenna is high directly after the transmission antenna is switched, selects a pattern in which the frequency of the reference signal transmissions from the standby antenna is low when a given condition is then satisfied, and transmits the reference signal based on the selected pattern.

6. The mobile communication device according to claim 1 or 2, further comprising a moving speed measuring unit which measures a moving speed of the mobile communication device,
wherein the baseband processor determines the switching likelihood based on the measured moving speed, selects a pattern in which the frequency of the reference signal transmissions from the standby antenna is low when the measured moving speed is low, selects a pattern in which the frequency of the reference signal transmissions from the standby antenna is high when the measured moving speed is high, and transmits the reference signal based on the selected pattern.

7. A base station device that performs radio communication with a mobile communication device comprising a plurality of antennas which transmits and receives a radio signal, and a baseband processor which selects a transmission antenna used for data signal transmission from the plurality of antennas and transmits a data signal using the transmission antenna,
wherein the base station device comprises a baseband unit which determines whether the transmission antenna is to be switched based on quality indicators of reference signals received from the plurality of antennas, and determines a timing when the reference signal is transmitted using a standby antenna not used for the data signal transmission based on the likelihood of the transmission antenna being switched.

8. A radio control method comprising:
selecting, by a mobile communication device comprising a plurality of antennas which transmits and receives a radio signal, a transmission antenna used for data signal transmission from the plurality of antennas based on an instruction from a base station device;
transmitting, by the mobile communication device, a data signal using the transmission antenna;
determining, by the mobile communication device, a timing when the reference signal is transmitted using a standby antenna not used for data signal transmission, based on the likelihood of the transmission antenna being switched; and
transmitting the reference signal at the determined timing.

9. A mobile communication system which transmits a signal from a mobile communication device to a base station device through spatial diversity,
wherein the base station device indicates a transmission pattern to the mobile communication device, an antenna from which a reference signal is transmitted from the mobile communication device to the base station device and a timing when the reference signal is transmitted from the mobile communication device to the base station device being set in the transmission pattern, and
the mobile communication device transmits the reference signal according to the transmission pattern indicated by the base station device.

10. The mobile communication system according to claim 9, wherein the transmission pattern is indicated to each mobile communication device.

11. The mobile communication system according to claim 9, wherein a reference signal transmission cycle is determined by selecting one of a plurality of patterns.

12. The mobile communication system according to claim 11, wherein the plurality of patterns comprise a pattern in which two antennas alternately transmit the reference signal, and a pattern in which the two antennas do not alternately transmit the reference signal.

13. The mobile communication system according to any one of claims 9 to 12, wherein the mobile communication device transmits the reference signal according to the transmission pattern indicated by the base station device until a new indication is received.

14. A base station device in a mobile communication system in which a signal is transmitted from a mobile communication device to a base station device through spatial diversity,
wherein the base station device indicates a transmission pattern to the mobile communication device, an antenna from which a reference signal is transmitted from the mobile communication device to the base station device and a timing when the reference signal is transmitted from the mobile communication device to the base station device being set in the transmission pattern.

15. The base station device according to claim 14, wherein the transmission pattern is indicated to each mobile communication device.

16. The base station device according to claim 14, wherein the transmission pattern is one transmission pattern selected from a plurality of transmission patterns, a reference signal transmission cycle being set in the transmission pattern.

17. The base station device according to claim 16, wherein the plurality of patterns comprise a pattern in which two antennas alternately transmit the reference signal, and a pattern in which the two antennas do not alternately transmit the reference signal.

18. A mobile communication device in a mobile communication system in which a signal is transmitted from the mobile communication device to a base station device through spatial diversity,
wherein the mobile communication device receives an indication of a transmission pattern from the base station device and transmits a reference signal according to the indication, an antenna from which the reference signal is transmitted from the mobile communication device to the base station device and a timing when the reference signal is transmitted from the mobile communication device to the base station device being set in the transmission pattern.

19. The mobile communication device according to claim 18, wherein the transmission pattern is one transmission pattern selected from a plurality of transmission patterns, and the reference signal is transmitted based on a transmission cycle determined based on the pattern.

20. The mobile communication device according to claim 18 or 19, wherein the mobile communication device transmits the reference signal according to the transmission pattern indicated by the base station device until a new indication is received.
